# EUROPÄISCHE PATENTSCHRIFT

(11) **EP 0 936 124 B1**
(45) Veröffentlichungstag und Bekanntmachung des Hinweises auf die Patenterteilung: **17.04.2002**
(21) Anmeldenummer: 99250013.2
(22) Anmeldetag: 15.01.1999
(51) Int. Cl.: B61F 5/24

(54) **Vorrichtung zur aktiven Querzentrierung und Schwingungsdämpfung bei Schienenfahrzeugen (AQZ-Zylinder)**
Device for active lateral centring and damping of vibrations of railway vehicles (AQZ cylinder)
Dispositif pour le centrage latéral actif et l'amortissement des vibrations de véhicules ferroviaires (AQZ cylindre)

(30) Priorität: 12.02.1998 DE 19806347
(43) Veröffentlichungstag der Anmeldung: 18.08.1999
(73) Patentinhaber: Knorr-Bremse MRP Systeme für Schienenfahrzeuge GmbH & Co. KG, 30453 Hannover (DE)
(72) Erfinder: Jansen, Johannes, 30519 Hannover (DE); Schweer, Karl-Heinz, 30974 Wennigsen (DE)

(56) Entgegenhaltungen:
- EP-A- 0 592 950
- DE-A- 19 512 437
- DE-C- 4 137 869
- DE-C- 4 420 367

## Beschreibung

Die Erfindung bezieht sich auf eine Vorrichtung zur Querzentrierung und Schwingungsdämpfung bei Schienenfahrzeugen gemäß dem Oberbegriff des Patentanspruches 1.

Im Stand der Technik sind passiv wirkende Vorrichtungen zur Querzentrierung und Schwingungsdämpfung bei Fahrzeugen beispielsweise aus der DE 25 50 235 A1 bekannt. Die bekannte Vorrichtung strebt das Ziel an, die auf dem Gebiet der Schienenfahrzeugtechnik auftretenden Schlingerbewegungen der Fahrzeuge infolge hoher Fahrzeuggeschwindigkeiten entgegenzuwirken. Die Vorrichtung besteht im wesentlichen aus zwei Dämpfern, deren entgegengesetzte Kammern kreuzweise miteinander verbunden sind, während eine dritte Verbindung die Vorratsräume beider Dämpfer verbindet. Der Kolben in einem Dämpfer ist mit einer Kolbenstange verbunden, die aus einem Kopfstück herausragt und dort mit einer Befestigungseinrichtung zur Anbringung an ein Fahrzeug versehen ist, die gegenüberliegend auch von einem unteren Kopfstück getragen wird. Die Vorrichtung ist robust und verschleißarm konzipiert und daher gut geeignet, in der verschmutzten Umgebung eines Fahrgestells ohne hohen Reparatur- und Wartungsaufwand betrieben zu werden.

Der Einsatz einer derartigen passiv wirkenden Vorrichtung wirft jedoch das Problem auf, daß die Dämpfer zwar so auslegbar sind, daß eine hinreichende Schwingungsdämpfung ermöglicht wird; dies geht jedoch mit einer übermäßigen Erhöhung der Härte der Fahrzeugfederung einher. Damit wird ein negativer Einfluß insbesondere auf eine Stoß- und Rüttelbewegungskompensation ausgeübt.

Eine passive Dämpfung wird daher den heutigen Anforderungen an einen hohen Fahrkomfort nicht mehr gerecht. Ausgehend von immer höheren Geschwindigkeiten, die durch immer schwerere Lokomotiven mit größeren Zugkräften erzeugt werden, entstehen entsprechend höhere Kräfte, die über die Schiene auf das Schienenbett übertragen werden, wodurch diese immer stärkeren Erschütterungen ausgesetzt sind. Durch die dabei auftretenden unterschiedlichen Frequenzen zwischen Fahrzeug und Schiene sind passive Systeme nicht sehr geeignet, die bestehenden Probleme zu lösen.

In der deutschen Patentschrift DE 41 37 869 C wird daher eine geregelte und insoweit aktiv wirkende Vorrichtung zur Schwingungsdämpfung und zusätzlich für eine Querzentrierung bei Schienenfahrzeugen vorgeschlagen. Hierbei werden die Schwingungen, die in Querebenen zur Fahrtrichtung zwischen dem Schienenfahrzeugaufbau und dem Schienenfahrgestell auftreten und die nur teilweise von mechanischen und/oder pneumatischen Federanordnungen aufgefangen werden können kompensiert, indem in zumindest einem zwischen Schienenfahrzeuggestell und Schienenfahrzeugaufbau angeordneten pneumatischen oder hydraulischen Zylinder mit doppelseitig über mehrere Ventile beaufschlagbaren Kolben die Drücke in Abhängigkeit von den Fahrzuständen geregelt werden, wobei unterschiedliche Fahrsteifigkeiten entsprechend der Dynamik und der Höhe der zwischen dem Fahrzeugaufbau und dem Fahrgestell wirkenden Querkräfte eingestellt werden.

Bei einer Geradeausfahrt des Schienenfahrzeuges kann der Fahrzeugaufbau über dem Fahrgestell frei hin- und herpendeln, wodurch verhindert wird, daß kurze Querbewegungen des Fahrgestells - beispielsweise verursacht durch Schienenstöße - auf den Fahrzeugaufbau übertragen werden. Diese Entkopplung des Fahrzeugaufbaus vom Fahrgestell ermöglicht einen hohen Fahrkomfort.

Bei einer Kurvenfahrt würde sich der Fahrzeugaufbau jedoch bedingt durch die auftretenden Fliehkräfte an einen Endanschlag des Fahrgestells - beispielsweise einer Feder mit progressiver Kennlinie - anlegen und alle Querbewegungen würden nun auf den Fahrzeugaufbau übertragen werden, was zu einer Beeinträchtigung des Fahrkomforts führen würde. Abhilfe schafft hier die aktiv wirkende Vorrichtung mit ihrem pneumatischen oder hydraulischen Zylinder, der als Koppelglied zwischen Fahrzeugaufbau und Fahrgestell eingesetzt ist. Bei Geradeausfahrt befindet sich - wie oben beschrieben- der Wagenkasten mittig über dem Fahrgestell, der Kolben des pneumatischen oder hydraulischen Zylinders befindet sich dann in einer Mittelstellung, d. h. die Kolbenstange ist halb ausgefahren und beide Zylinderräumen sind entlüftet. Das oben beschriebene Pendein des Fahrzeugaufbaus kann also ausgeführt werden. Bewegt sich der Fahrzeugaufbau jedoch aus einem für das Pendeln definierten Fenster hinaus, so wird einem Zylinderraum ein Druck zugeführt, der den Fahrzeugaufbau wieder in das Fenster verschiebt. Es herrscht damit ein geregeltes Gleichgewicht zwischen den von außen auf das Fahrzeug wirkenden Kräfte und der Kraft, die durch den zugeführten Druck am Kolben ansteht. Eventuell auftretende Querbewegungen des Fahrgestells können nun wieder innerhalb des Fensters ausgeglichen werden.

In der Praxis hat sich gezeigt, daß durch die vorstehend beschriebene Kombination aus passiver und aktiver Querzentrierung bzw. Schwingungsdämpfung eine erhebliche Verbesserung des Fahrkomforts bei Schienenfahrzeugen erzielt werden kann.

Die Leistungsfähigkeit dieser Vorrichtung stößt jedoch insbesondere bei längerem Betrieb an ihre Grenzen. Bedingt durch die pendelnde Kolbenbewegung im Zylinder wird bei der bekannten Vorrichtung stets Luft aus der Umgebung angesaugt und wieder abgeblasen. Die Luft in der verschmutzten Umgebung eines Fahrwerkes des Schienenfahrzeuges führt daher zu einem vorzeitigen Verschleiß der bewegbaren Teile, und damit zu einem unbefriedigend hohen Reparatur- und Wartungsaufwand. Weiterhin wirkt ein vorzeitiger Verschleiß der Kolben-Zylinder-Einheit nachteilig als Störgröße auf die Regelung ein, was letztlich auch den Fahrtkomfort negativ beeinflußt.

Der Erfindung liegt daher die Aufgabe zugrunde, eine Vorrichtung zur aktiven Querzentrierung und Schwingungsdämpfung bei Schienenfahrzeugen dahingehend weiterzubilden, daß ein dauerhafter verschleißarmer Betrieb trotz verschmutzter Umgebung auf einfache Weise ermöglicht wird, ohne den Fahrtkomfort zu mindern.

Die Aufgabe wird ausgehend von einer Vorrichtung gemäß dem Oberbegriff des Patentanspruches 1 in Verbindung mit dessen kennzeichnenden Merkmalen gelöst. Die Unteransprüche 2 bis 11 geben vorteilhafte Ausgestaltungsformen der Erfindung wieder.

Die Erfindung schließt die technische Lehre ein, daß zur Entlüftung eines Zylinderraumes eine beide Zylinderräume verbindende Bypassleitung vorgesehen ist. Die Bypassleitung ist über die Ausgänge der Ventile zur Entlüftung geführt. Von ihr zweigt eine an die Atmosphäre führende und zumindest teilweise einen geringeren Querschnitt aufweisende Druckleitung oder Öffnung ab. Die Bypassleitung steht weiterhin über ein in einer Druckleitung integriertes federbelastetes Rückschlagventil mit der Atmosphäre in Verbindung.

Im Grundzustand, d. h. bei einer Geradeausfahrt des Schienenfahrzeuges, sind die der Entlüftung dienenden Ventile geöffnet, so daß sich der Kolben frei in dem Zylinder bewegen kann und somit das Pendeln des Fahrzeugaufbaus über dem Fahrgestell ermöglicht wird. Dabei sind die Zylinderräume bei geöffneten Ventilen über die Bypassleitung direkt miteinander verbunden. Es findet insoweit ein Luftaustausch zwischen diesen beiden Zylinderräumen statt, ohne daß ein wesentlicher Luftaustausch mit der Umgebung erfolgt. Lediglich eine Volumendifferenz von ca. 4 % zwischen der verdrängten bzw. angesaugten Luft des einen Zylinderraumes und der entsprechend verdrängten bzw. angesaugten Luft - die durch die Luftverdrängung der Kolbenstange im anderen Zylinderraum verursacht wird - wird über eine den Durchmesser der Druckleitung verringernde Blende oder eine kleine Öffnung mit der Umgebung ausgeglichen, die vorteilhafter Weise zusätzlich mit einem Filter - insbesondere einem Sinterfilter - zum Schutz gegen grobe Verschmutzung versehen ist.

Im Regelzustand, d. h. insbesondere während einer Kurvenfahrt des Schienenfahrzeuges, wird das der Entlüftung dienende Ventil des mit Druck zu beaufschlagenden Zylinderraumes geschlossen und das der Belüftung dienende Ventil so weit geöffnet, bis ein Kräftegleichgewicht zwischen den von außen auf den Fahrzeugaufbau wirkenden Kräften und der Kolbenkraft erreicht ist und der Fahrzeugaufbau damit wieder in der Mitte über dem Drehgestell zentriert ist. Bei nachlassenden äußeren Kräften wird der Zylinderraum wieder entlüftet. Diese Entlüftung erfolgt über die mit dem Rückschlagventil versehene Druckleitung die von der Bypassleitung abzweigt und an die Atmosphäre führt. Diese separate Druckleitung ist notwendig, da die in diesem Betriebszustand abströmende Luft nicht von dem anderen Zylinderraum aufgenommen werden kann und auch nicht schnell genug durch die querschnittsverminderte parallel geschaltete Druckleitung oder Öffnung entweichen kann.

Durch die erfindungsgemäße Minimierung des Luftaustausches mit der im Einsatzbereich der Vorrichtung verschmutzten Umgebung wird auf einfache Weise ein verschleißarmer Betrieb der Kolben-Zylinder-Einheit möglich, was die Reparatur- und Wartungsfreundlichkeit der Vorrichtung zu Gute kommt und somit auch einen dauerhaften Fahrkomfort sicherstellt.

Die Ventile sind vorzugsweise als elektropneumatische Druckregelventile ausgeführt. Im Gegensatz zu einfachen Schaltventilen - die lediglich binär schalten können - kann mit derartig analog arbeitenden Ventilen eine präzisere Regelung verwirklicht werden. Zur Erhöhung der Präzision der Regelung trägt auch die Maßnahme bei, daß die Ventile - sowie je ein pro Zylinderraum vorgesehener Drucksensor - direkt im Bereich der Zylinderböden in die Kolben-Zylinder-Einheit integriert sind. Damit wird eine direkte Verbindung zwischen den Ventilen bzw. Drucksensoren zu dem ihnen zugeordneten Zylinderraum sichergestellt. Nachteilige Strömungsverluste - die bei zusätzlichen Druckleitungen auftreten würden - werden insoweit minimiert und die Regelgeschwindigkeit und -genauigkeit erhöht sich, was letztlich den Fahrkomfort weiter verbessert.

Um insgesamt eine kompakte Anordnung der Vorrichtungsbestandteile zu schaffen, sind auch die der Kolben-Zylinder-Einheit zugeordneten Elektronikeinheiten für die Regelung direkt im Bereich der Zylinderböden in die Kolben-Zylinder-Einheit integriert. Für die Elektronikeinheiten kann weiterhin ein von außen her zugänglicher zentraler elektrischer Anschluß vorgesehen sein der an der Kolben-Zylinder-Einheit angeordnet ist und der von einem mehrpoligen Steckverbinder gebildet wird.

Eine weitere die Erfindung verbessernde Maßnahme besteht darin, daß eine die fahrtbedingten Querbewegungen ermittelnde Wegmeßeinrichtung in der Kolbenstange der Kolben-Zylinder-Einheit integriert ist. Vorzugsweise ist die Wegmeßeinrichtung nach Art eines Schiebewiderstandes aufgebaut und aus einem an der Kolbenstangenseite entgegengesetzten Zylinderboden der Kolben-Zylinder-Einheit befestigt. Ein in den Zylinderraum gerichteter Stator mit elektrischen Anschlüssen wirkt mit einem in die komplementär dazu ausgebildete Kolbenstange integrierten Schleifer zusammen. Zur Vermeidung einer Übertragung von Drehbewegungen im Bereich der Wegmeßeinrichtung kann der Schleifer über ein Kugellager mit der Kolbenstange. verbunden sein. Um einen Verschleiß im Bereich der in die Kolben-Zylinder-Einheit eintauchenden Kolbenstange zu minimieren, kann dort ein zwischen der Kolbenstange und der Kolben-Zylinder-Einheit angeordneter Faltenbalg vorgesehen werden.

Die insgesamt kompakte und vor Umwelteinflüssen geschützte, hinsichtlich ihres Regelverhaltens verbesserte Vorrichtung zur Querzentrierung und Schwingungsdämpfung verbindet die Möglichkeit eines verschleißarmen Dauerbetriebes mit einer Steigerung des Fahrkomforts bei Schienenfahrzeugen durch eine präzise aktive Kompensation von störenden Querkräften.

Die Erfindung wird in der nachstehenden Beschreibung in bevorzugter Ausführungsform anhand der Figuren dargestellt. Es zeigen:
- Fig. 1: eine schematische Darstellung eines Fahrgestells mit Fahrzeugaufbau und dazwischen angeordneter Vorrichtung zur Querzentrierung und Schwingungsdämpfung mit einer Kolben-Zylinder-Einheit,
- Fig. 2: einen teilweise Längsschnitt durch die Kolben-Zylinder-Einheit im Bereich der Ventile,
- Fig. 3: einen vollständigen Längsschnitt durch die Kolben-Zylinder-Einheit nach Fig. 2,
- Fig. 4: den Querschnitt durch die Kolben-Zylinder-Einheit nach Fig. 2 entlang der Schnittlinien A-A und B-B und
- Fig. 5: ein Blockschaltbild einer Ansteuerung der in Fig. 2 gezeigten Kolben-Zylinder-Einheit.

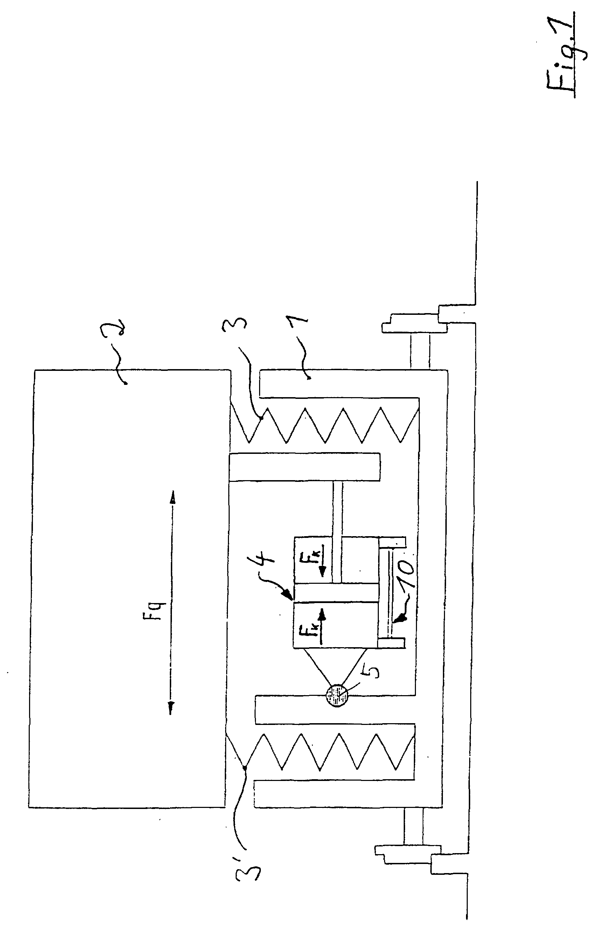

Von einem Schienenfahrzeug ist in Fig. 1 ein Fahrgestell 1 mit darauf befestigtem Fahrzeugaufbau 2 schematisch dargestellt. Die Komponenten eines passiven Schwingungsdämpfungssystems sind durch die beidseitig in der Mitte angeordneten Schraubenfedern 3 und 3' angedeutet. Parallel zu den Schraubenfedern 3 und 3' ist ein in der Figur nicht dargestelltes hydraulisches Dämpfersystem angeordnet.

Diese passive Schwingungsdämpfung fängt die quer zur Fahrtrichtung auftretenden Kräfte (Fq) nur teilweise auf. Zusätzlich zu dieser Anordnung ist zwischen dem Fahrgestell 1 und dem Fahrzeugaufbau 2 zumindest eine pneumatische Kolben-Zylinder-Einheit 4 angeordnet, die mit einem Ende mittels eines Gelenkes 5 am Fahrgestell 1 befestigt ist, während das andere Ende der Kolben-Zylinder-Einheit 4 über eine Kolbenstange mit dem Fahrzeugaufbau 2 in Verbindung steht. Die Kolben-Zylinder-Einheit 4 ist Bestandteil einer aktiven Schwingungsdämpfung und Querzentrierung des Fahrzeugaufbaus 2 gegenüber dem Fahrgestell 1. Das System des aktiven Eingriffs in zu kompensierende fahrtbedingte Schwingungen oder Verschiebungen bedient sich eines Spiels zwischen dem Fahrgestell 1 und dem Fahrzeugaufbau 2, um eine freie Pendelwirkung zu gewährleisten. Erst bei Überschreiten dieses Pendelspiels greift die aktive Querzentrierung in das Schwingungsverhalten ein und übernimmt die weitere Führung des Fahrzeugaufbaus 2 gegenüber dem Fahrgestell 1. Die Kolben-Zylinder-Einheit 4 ist mit einer zwischen zwei Ventilen 6 und 7 angeordneten Bypassleitung 10 ausgestattet, die der Entlüftung von Zylinderräumen 8 und 9 der Kolben-Zylinder-Einheit 4 dient.

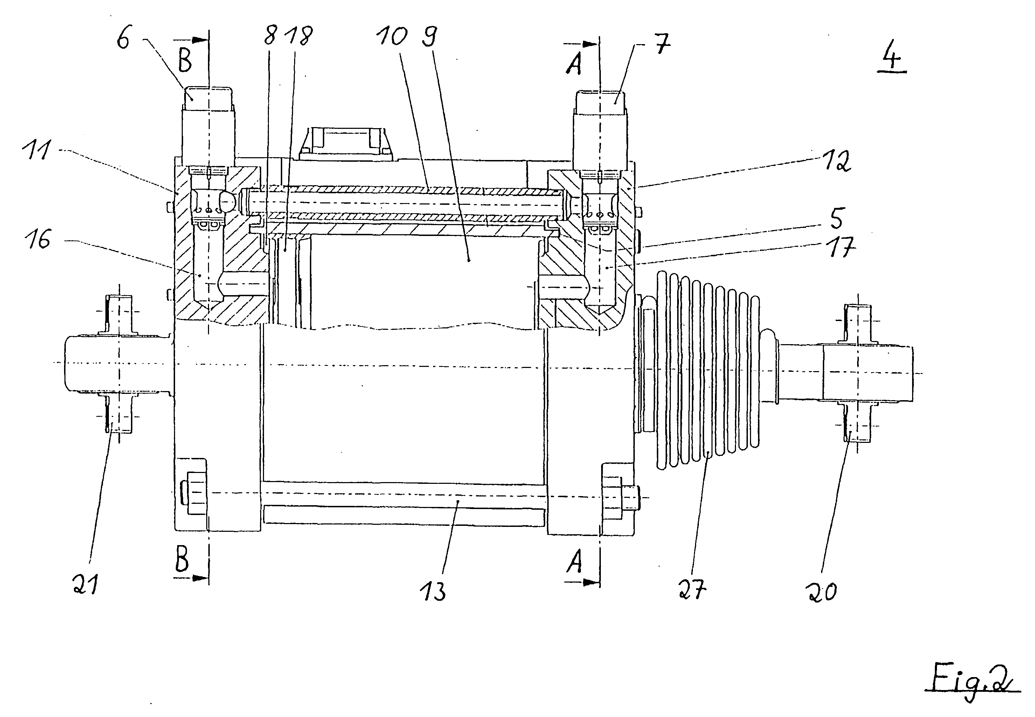

Gemäß Fig. 2 ist die Bypassleitung 10 zwischen stirnseitig an der Kolben-Zylinder-Einheit 4 angeordneten Zylinderböden 11 und 12 gehalten. Die erforderliche Befestigungsspannung wird über vier Zugankerschrauben 13 aufgebracht. An den Kontaktstellen zwischen der Bypassleitung 10 und den Zylinderböden 11 und 12 befinden sich Dichtungen. In die Zylinderböden 11 und 12 ist weiterhin ein mit der Bypassleitung 10 in Verbindung stehendes Ventil 6 bzw. 7 mit Proportionalmagnetantrieb eingeschraubt. Die beiden Ventile 6 und 7 stellen über einen Druckkanal 16 bzw. 17 eine Verbindung zwischen der Bypassleitung 10 und je einem Zylinderraum 8 bzw. 9 her.

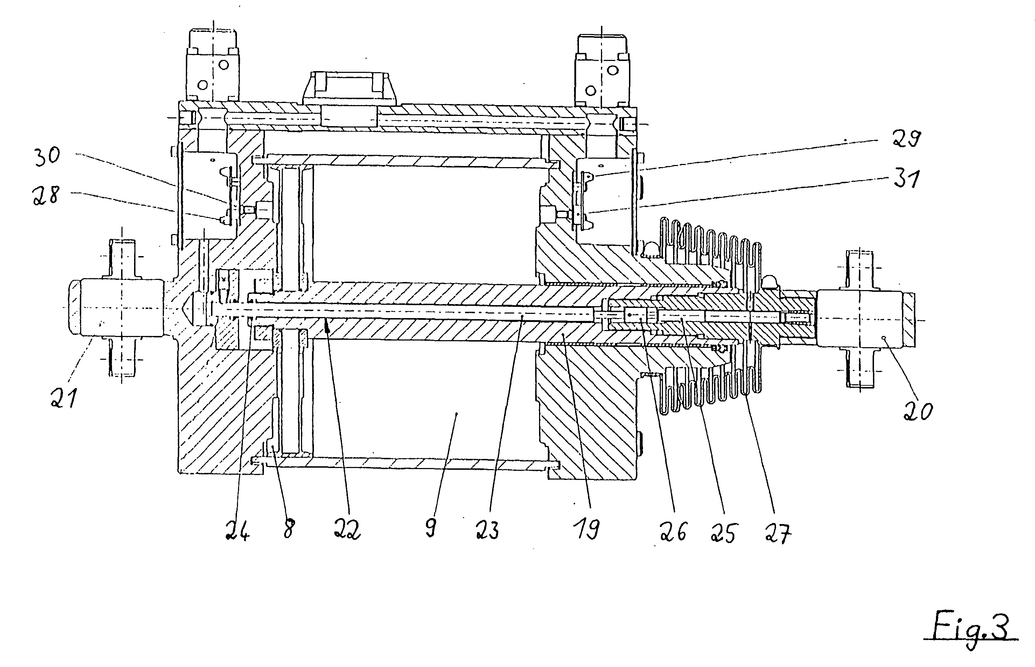

Vom Kolben 18 geht nach Fig. 3 eine Kolbenstange 19 ab, die den Zylinderboden 12 durchdringt und an ihrem Ende ein Lager 20 trägt. Ein weiteres Lager 21 ist am anderen Zylinderboden 11 vorgesehen. Zur elektrischen Wegmessung für die Regelung der aktiven Querzentrierung des Fahrzeugaufbaus 2 gegenüber dem Fahrgestell 1 dient ein in die Kolbenstange 19 integrierter linearer Wegaufnehmer 22.

Ein Stator 23 mit Anschlußkabeln, die der Weiterleitung der gemessenen Wegsignale an die Regelung dienen, ist im Zylinderboden 11 befestigt, während ein Schleifer 24 über eine Stange 25 mit Kugellager 26 mit der Kolbenstange 19 längsbeweglich verbunden ist. Das Kugellager 26 verhindert die Übertragung eventueller Drehbewegungen der Kolbenstange 19 auf den Wegaufnehmer 22. Die Kolbenstange 19 ist an ihrer Durchdringungsstelle mit dem Zylinderboden 12 vor Verschleiß infolge Verschmutzung durch einen Faltenbalg 27 geschützt. Ebenfalls vor Verschmutzung geschützt sind jeweils in den beiden Zylinderböden 11 und 12 integrierte Elektronikeinheiten 28 und 29 untergebracht. Die Elektronikeinheiten 28 und 29 sind jeweils mit Drucksensoren 30 und 31 ausgestattet, welche die Druckistwerte in den Zylinderräumen 8 und 9 erfassen. Die Elektronikeinheiten 28 und 29 verarbeiten die jeweils gewonnenen Druck- und Wegmeßwerte und dienen als Reglerelektronik zur Ansteuerung der ihnen zugeordneten Ventile der Kolben-Zylinder-Einheit 4. Der Stromund Signalanschluß von außen erfolgt über einen Anschluß.

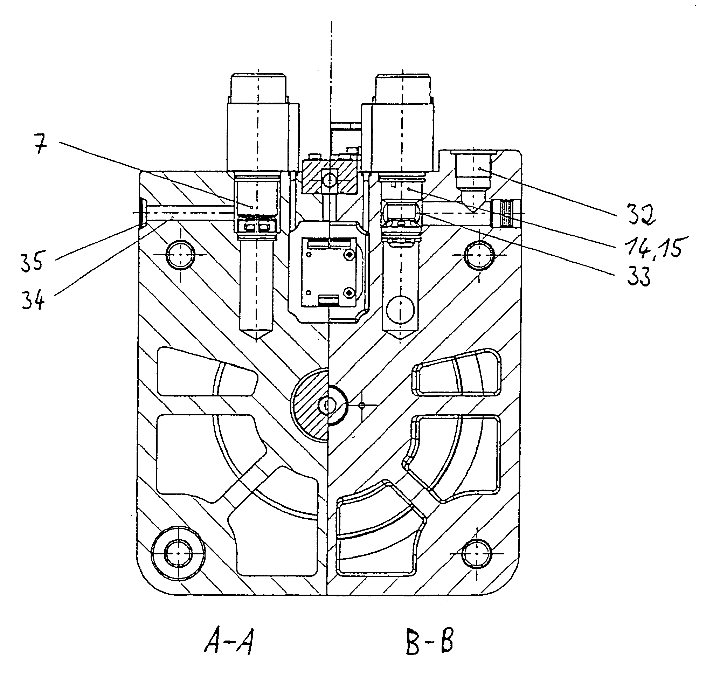

Neben den Ventilen 6 und 7 zur Entlüftung der Zylinderräume 8 und 9 ist auch - wie Fig.4 im Schnitt B-B zeigt - je ein Ventil 14 und 15 zur Belüftung der beiden Zylinderräume 8 und 9 vorgesehen. Dafür weist die Kolben-Zylinder-Einheit 4 einen Druckanschluß 32 im Bereich des Ventils 14 auf. Der Speisedruck wird über eine Druckleitung 33 an das andere räumlich davorliegende und insoweit in der Figur nicht darstellbare Ventil 15 zur Belüftung des anderen Zylinderraumes 9 geführt. Von der die Ventile 6 und 7 zur Entlüftung verbindenden Bypassleitung 10 geht eine Druckleitung 34 ab, die über ein Rückschlagventil 35 an die Atmosphäre führt. Eine in der Figur nicht dargestellte kleine Öffnung an der Bypassleitung 10 dient - wie oben beschrieben - einem geringen Luftaustausch mit der Umgebung.

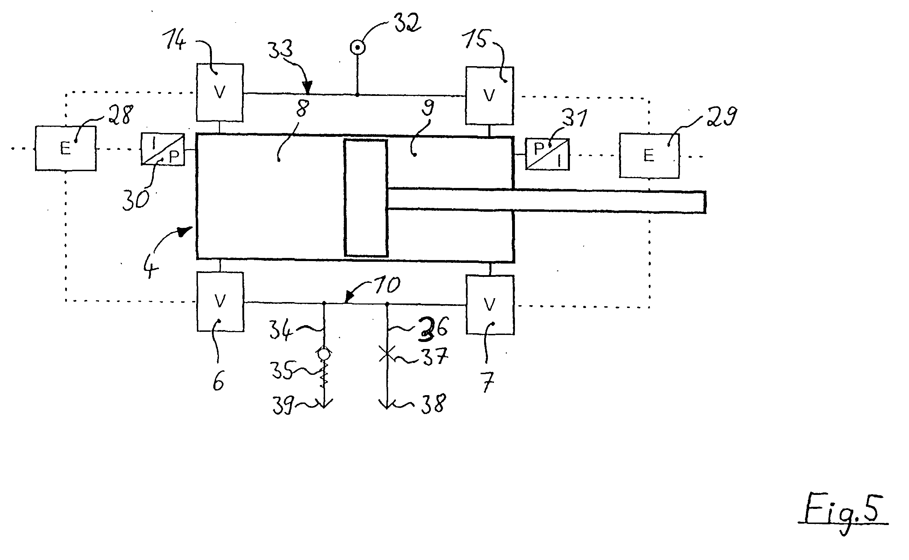

Das Blockschaltbild gemäß Fig.5 zeigt die Verknüpfung der Elemente zur Ansteuerung der Kolben-Zylinder-Einheit 4. Die Belüftung der Kolben-Zylinder-Einheit 4 erfolgt ausgehend vom Druckanschluß 32 über die Druckleitung 33 und die den Zylinderräumen 8 und 9 der Kolben-Zylinder-Einheit 4 jeweils zugeordneten Ventile 14 bzw. 15. Die Entlüftung wird über die Ventile 6 und 7 realisiert, die je mit einem Zylinderraum 8 bzw. 9 in Verbindung stehen. Ausgangsseitig sind die Ventile 6 und 7 nicht direkt mit der Atmosphäre verbunden; hier ist die Bypassleitung 10 angeordnet, von der aus eine Verbindung über eine den Durchmesser einer abgehenden Druckleitung 36 verringernden Blende 37 über einen Filter 38 mit der Atmosphäre hergestellt wird. Parallel dazu befindet sich eine Druckleitung 34 mit Rückschlagventil 35, die ebenfalls über einen Filter 39 mit der Atmosphäre verbunden ist.

Die Ansteuerung der Ventile 6 und 7 sowie 14 und 15 erfolgt über je eine den Zylinderräumen 8 und 9 zugeordnete Elektronikeinheit 28 bzw. 29. So gibt die Elektronikeinheit 28, die dem Zylinderraum 8 zugeordnet ist, ihre Ansteuersignale an das Ventil 14 zur Entlüftung sowie an das Ventil 6 zur Belüftung des Zylinderraumes 8. Dabei wird die Elektronikeinheit 28 vom Drucksensor 30 über den aktuell im Zylinderraum 8 herrschenden Druckwert versorgt. Entsprechend gibt die Elektronikeinheit 29, die dem Zylinderraum 9 zugeordnet ist, ihre Ansteuersignale an das Ventil 15 zur Entlüftung sowie an das Ventil 7 zur Belüftung des Zylinderraumes 9. Die Elektronikeinheit 29 wird entsprechend vom Drucksensor 31 über den aktuell im Zylinderraum 9 herrschenden Druckwert versorgt.

### Bezugszeichenliste

- 1: Fahrgestell
- 2: Fahrzeugaufbau
- 3: Schraubenfeder
- 4: Kolben-Zylinder-Einheit
- 5: Dichtung
- 6: erstes Ventil, Entlüftung
- 7: zweites Ventil, Entlüftung
- 8: erster Zylinderraum
- 9: zweiter Zylinderraum
- 10: Bypassleitung
- 11: Zylinderboden, geschlossen
- 12: Zylinderboden, durchdrungen
- 13: Zugankerschraube
- 14: erstes Ventil, Belüftung
- 15: zweites Ventil, Belüftung
- 16: erster Duckkanal
- 17: zweiter Druckkanal
- 18: Kolben
- 19: Kolbenstange
- 20: Lager, kolbenstangenseitig
- 21: Lager, zylinderbodenseitig
- 22: Wegaufnehmer
- 23: Stator
- 24: Schleifer
- 25: Stange
- 26: Kugellager
- 27: Faltenbalg
- 28: erste Elektronikeinheit
- 29: zweite Elektronikeinheit
- 30: erster Drucksensor
- 31: zweiter Drucksensor
- 32: Druckanschluß
- 33: Druckleitung
- 34: Druckleitung
- 35: Rückschlagventil
- 36: Druckleitung
- 37: Blende
- 38: Filter
- 39: Filter

## Patentansprüche

1. Vorrichtung mit einem aktiven pneumatischen System zur aktiven Querzentrierung und Schwingungsdämpfung bei Schienenfahrzeugen, bestehend aus einem quer zur Fahrtrichtung pendelartig bezüglich eines Fahrgestells (1) beweglichen Fahrzeugaufbaus (2), dessen fahrtbedingten Querbewegungen zumindest teilweise kompensierbar sind über ein zwischen dem Fahrgestell (1) und dem Fahrzeugaufbau (2) angeordneten passiven Feder-Dämpfersystem sowie über das aktive pneumatische System, bestehend aus zumindest einer doppelseitig beaufschlagbaren Kolben-Zylinder-Einheit (4), deren Drücke in beiden Zylinderräumen (8 bzw. 9) in Abhängigkeit von Fahrzuständen über Ventile (6 und 7 bzw. 14 und 15) regelbar sind, von denen mindestens ein Ventil (14 bzw. 15) pro Zylinderraum (8 bzw. 9) für dessen Belüftung und mindestens ein Ventil (6 bzw. 7) pro Zylinderraum (8 bzw. 9) für dessen Entlüftung vorgesehen ist, wobei ferner mindestens eine Elektronikeinheit (28 bzw. 29) die zu regelnden Druckwerte in Abhängigkeit der über einen Wegaufnehmer (22) ermittelten fahrtbedingten Querbewegungen berechnet und an die Ventile (6 und 7 bzw. 14 und 15) durchsteuert,
**dadurch gekennzeichnet,**
**daß** zur Entlüftung eines Zylinderraumes (8 bzw. 9) eine beide Zylinderräume (8 und 9) verbindende Bypassleitung (10) vorgesehen ist, die über die Ausgänge der Entlüftungsventile (6 und 7) geführt ist und daß von der Bypassleitung (10) eine mit der Atmosphäre kommunizierende und zumindest teilweise einen geringeren Querschnitt aufweisende Druckleitung (36) oder Öffnung abzweigt, wobei die Bypassleitung (10) weiterhin über ein in einer Druckleitung (34) integriertes federbelastetes Rückschlagventil (35) mit der Atmosphäre in Verbindung steht.

2. Vorrichtung nach Anspruch 1,
**dadurch gekennzeichnet,**
**daß** die die an die Atmosphäre führenden Druckleitungen (36 und 34) je mit einem endseitig angeordneten Filter (38 bzw. 39) versehen sind.

3. Vorrichtung nach Anspruch 1,
**dadurch gekennzeichnet,**
**daß** die den beiden Zylinderräumen (8 und 9) zugeordneten Ventile (6 und7 bzw. 14 und 15) als elektropneumatische Druckregelventile ausgebildet sind.

4. Vorrichtung nach Anspruch 3,
**dadurch gekennzeichnet,**
**daß** die elektropneumatischen Druckregelventile als über einen Proportional-magneten angetriebene Sitzventile ausgeführt sind.

5. Vorrichtung nach Anspruch 1,
**dadurch gekennzeichnet,**
**daß** die Ventile (6 und 7 bzw. 14 und 15) sowie pro Zylinderraum (8 und 9) vorgesehene Drucksensoren (30 bzw. 31) direkt im Bereich der Zylinderböden (11 und 12) in die Kolben-Zylinder-Einheit (4) integriert sind.

6. Vorrichtung nach Anspruch 1,
**dadurch gekennzeichnet,**
**daß** die den Zylinderräumen (8 und 9) zugeordneten Elektronikeinheiten (28 bzw 29) direkt im Bereich der Zylinderböden (11 und 12) in die Kolben-Zylinder-Einheit (4) integriert sind.

7. Vorrichtung nach Anspruch 1,
**dadurch gekennzeichnet,**
**daß** für die Elektronikeinheiten (28 und 29) ein von außen her zugänglicher zentraler elektrischer Anschluß vorgesehen ist, der an der Kolben-Zylinder-Einheit (4) angeordnet ist und von einem mehrpoligen Steckverbinder gebildet wird.

8. Vorrichtung nach Anspruch 1.
**dadurch gekennzeichnet,**
**daß** die die fahrtbedingten Querbewegungen ermittelnde Wegaufnehmer (22) in der Kolbenstange (19) der Kolben-Zylinder-Einheit (4) integriert ist.

9. Vorrichtung nach Anspruch 8,
**dadurch gekennzeichnet,**
**daß** der Wegaufnehmer (22) nach Art eines Schiebewiderstandes aufgebaut ist und aus einem an dem der Kolbenstangenseite entgegengesetzten Zylinderbodenlager (21) der Kolben-Zylinder-Einheit (4) befestigten und in den . Zylinder gerichteten Stator (23) mit elektrischen Anschlüssen sowie einem in die komplementär dazu hohl ausgebildete Kolbenstange (19) integrierten Schleifer (24) besteht.

10. Vorrichtung nach Anspruch 9,
**dadurch gekennzeichnet,**
**daß** zur Vermeidung einer Übertragung von Drehbewegungen der Schleifer (24) über ein Kugellager (26) mit der Kolbenstange (19) verbunden ist.

11. Vorrichtung nach Anspruch 1,
**dadurch gekennzeichnet,**
**daß** der in den Zylinder der Kolben-Zylinder-Einheit (4) eintauchende Bereich der Kolbenstange (19) durch einen zwischen der Kolbenstange (19) und dem Zylinder angeordneten Faltenbalg (27) abgedeckt ist.

## Claims

1. Device with an active pneumatic system for active lateral centring and damping of vibrations of railway vehicles, consisting of a vehicle structure. (2) that is pendulously movable transverse to the direction of travel with reference to a bogie (1), the travel-induced transverse movements of the vehicle structure being at least partly compensatable via a passive spring shock absorber system disposed between the bogie (1) and the vehicle structure (2) as well as via the active pneumatic system, the system consisting of at least one double-sidedly actuatable piston-cylinder unit (4), the pressures of which in both cylinder chambers (8 or 9) can be controlled as a function of travel states via valves (6 and 7; 14 and 15), of which at least one valve (14 or 15) is provided for each cylinder chamber (8 or 9) for aeration of the latter and at least one valve (6 or 7) is provided for each cylinder chamber (8 or 9) for its ventilation, at least one electronic unit (28 or 29) furthermore calculating the pressure values to be controlled as a function of the travel-induced transverse movements established via a displacement transducer (22) and controlling these through to the valves (6 and 7; 14 and 15),
**characterized in that**
to ventilate a cylinder chamber (8 or 9), a bypass line (10) connecting both cylinder chambers (8 and 9) is provided, which line is led via the outlets of the ventilating valves (6 and 7) and that branching off from the bypass line (10) is a pressure line (36) or opening communicating with the atmosphere and having at least in part a smaller cross-section, the bypass line (10) also being connected to the atmosphere via a springloaded check valve (35) integrated into a pressure line (34).

2. Device according to claim 1, **characterized in that** the pressure lines (36 and 34) leading to the atmosphere are each provided with a filter (38 or 39) arranged at the end.

3. Device according to claim 1, **characterized in that** the valves (6 and 7; 14 and 15) assigned to the two cylinder chambers (8 and 9) are formed as electropneumatic pressure regulating valves.

4. Device according to claim 3, **characterized in that** the electropneumatic pressure regulating valves are executed as seat valves driven via a proportional magnet.

5. Device according to claim 1, **characterized in that** the valves (6 and 7; 14 and 15) and pressure sensors (30 or 31) provided for each cylinder chamber (8 and 9) are integrated into the piston-cylinder unit (4) directly in the region of the cylinder bases (11 and 12).

6. Device according to claim 1, **characterized in that** the electronic units (28 or 29) assigned to the cylinder chambers (8 and 9) are integrated into the piston-cylinder unit (4) directly in the region of the cylinder bases (11 and 12).

7. Device according to claim 1, **characterized in that** a central electrical connection that is accessible from outside is provided for the electronic units (28 and 29), which connection is disposed on the piston-cylinder unit (4) and is formed by a multipole plug connector.

8. Device according to claim 1, **characterized in that** the displacement transducer (22) ascertaining the travel-induced transverse movements is integrated into the piston rod (19) of the piston-cylinder unit (4).

9. Device according to claim 8, **characterized in that** the displacement transducer (22) is constructed in the manner of a rheostat and consists of a stator (23), attached to the cylinder base bearing (21) of the piston-cylinder unit (4) opposed to the piston rod side and directed into the cylinder, with electrical connections and a slider (24) integrated into the piston rod (19) formed hollow so as to be complementary to the stator.

10. Device according to claim 9, **characterized in that** to avoid a transmission of rotary movements, the slider (24) is connected to the piston rod (19) via a ball bearing (26).

11. Device according to claim 1, **characterized in that** the region of the piston rod (19) entering the cylinder of the piston-cylinder unit (4) is covered by an expansion bellows (27) disposed between the piston rod (19) and the cylinder.

## Revendications

1. Dispositif pourvu d'un système pneumatique actif pour le centrage transversal actif et l'amortissement des vibrations de véhicules ferroviaires, constitué d'une caisse (2) de véhicule mobile pendulairement transversalement à la direction de marche par rapport à un bogie (1), dont les mouvements transversaux dus à la marche peuvent être au moins en partie compensés au moyen d'un système amortisseur passif à ressort disposé entre le bogie (1) et la caisse (2) de véhicule ainsi qu'au moyen du système pneumatique actif, constitué d'au moins un ensemble (4) piston-cylindre à double action dont les pressions dans les deux chambres (8, 9) de cylindre peuvent être réglées en fonction des états de marche au moyen de soupapes (6 et 7, 14 et 15) parmi lesquelles au moins une soupape (14, 15) par chambre (8, 9) de cylindre est prévue pour l'apport d'air à cette chambre et au moins une soupape (6, 7) par chambre (8, 9) de cylindre est prévue pour l'évacuation d'air de cette chambre, au moins une unité (28, 29) électronique calculant en outre les valeurs de pression à régler en fonction des mouvements transversaux dus à la marche déterminés au moyen d'un capteur (22) de déplacement, et les transmettant aux soupapes (6 et 7, 14 et 15),
**caractérisé en ce que**, pour évacuer l'air d'une chambre (8, 9) de cylindre, il est prévu une conduite (10) de dérivation qui relie les deux chambres (8 et 9) de cylindre et qui passe par les sorties des soupapes (6 et 7) d'évacuation d'air, et **en ce qu'**un orifice ou une conduite (36) de pression, possédant au moins pour partie une section plus petite et communiquant avec l'atmosphère, bifurque de la conduite (10) de dérivation, la conduite (10) de dérivation étant en outre reliée à l'atmosphère par l'intermédiaire d'un clapet (35) antiretour soumis à l'action d'un ressort et intégré dans une conduite (34) de pression.

2. Dispositif suivant la revendication 1, **caractérisé en ce que** les conduites (36 et 34) de pression menant à l'atmosphère sont chacune pourvues d'un filtre (38 ou 39) disposé à leur extrémité.

3. Dispositif suivant la revendication 1, **caractérisé en ce que** les soupapes (6 et 7, 14 et 15) associées aux deux chambres (8 et 9) de cylindre sont réalisées sous forme de régulateurs de pression électropneumatiques.

4. Dispositif suivant la revendication 3, **caractérisé en ce que** les régulateurs de pression électropneumatiques sont réalisés sous forme de soupapes à siège entraînées au moyen d'un aimant proportionnel.

5. Dispositif suivant la revendication 1, **caractérisé en ce que** les soupapes (6 et 7, 14 et 15) ainsi que des capteurs (30, 31) de pression prévus pour chaque chambre (8 et 9) de cylindre sont directement intégrés dans l'ensemble (4) piston-cylindre, dans la région des fonds (11 et 12) de cylindre.

6. Dispositif suivant la revendication 1, **caractérisé en ce que** les unités (28, 29) électroniques associées aux chambres (8 et 9) de cylindre sont directement intégrées dans l'ensemble (4) piston-cylindre, dans la région des fonds (11 et 12) de cylindre.

7. Dispositif suivant la revendication 1, **caractérisé en ce qu'**une connexion électrique centrale, accessible de l'extérieur, est prévue pour les unités (28, 29) électroniques, connexion qui est disposée sur l'ensemble (4) piston-cylindre et est formée par un connecteur multipolaire.

8. Dispositif suivant la revendication 1, **caractérisé en ce que** le capteur (22) de déplacement, qui détermine les mouvements transversaux dus à la marche, est intégré dans la tige (19) de piston de l'ensemble (4) piston-cylindre.

9. Dispositif suivant la revendication 8, **caractérisé en ce que** le capteur (22) de déplacement est conçu à la manière d'une résistance à curseur et est constitué d'un stator (23) pourvu de connexions électriques, fixé sur le palier (21) de fond de cylindre de l'ensemble (4) piston-cylindre qui est opposé au côté tige de piston, et dirigé dans le cylindre, et d'un curseur (24) intégré dans la tige (19) de piston réalisée creuse de façon complémentaire.

10. Dispositif suivant la revendication 9, **caractérisé en ce que**, pour éviter la transmission de mouvements de rotation, le curseur (24) est relié à la tige (19) de piston par l'intermédiaire d'un roulement (26) à billes.

11. Dispositif suivant la revendication 1, **caractérisé en ce que** la région de la tige (19) de piston qui s'enfonce dans le cylindre de l'ensemble (4) piston-cylindre est recouverte par un soufflet (27) disposé entre la tige (19) de piston et le cylindre.
